# EUROPEAN PATENT APPLICATION

(11) **EP 4 831 309 A1**
(43) Date of publication of application: **28.10.2026**
(21) Application number: 24908304.9
(22) Date of filing: 17.12.2024
(51) Int. Cl.: C22B 3/12, C22B 3/22, C22B 26/12

(54) **METHOD OF RECOVERING LITHIUM**

(30) Priority: 18.12.2023 KR 20230185251
(71) Applicant: POSCO Holdings Inc., Pohang-si, Gyeongsangbuk-do 37859 (KR)
(72) Inventor: YANG, Heok, Pohang-si, Gyeongsangbuk-do 37859 (KR); PARK, Jaesin, Pohang-si, Gyeongsangbuk-do 37859 (KR); PARK, Woonkyoung, Pohang-si, Gyeongsangbuk-do 37859 (KR); KUK, Seung Taek, Pohang-si, Gyeongsangbuk-do 37859 (KR); JUNG, Myungwon, Pohang-si, Gyeongsangbuk-do 37859 (KR); KIM, Ju Young, Pohang-si, Gyeongsangbuk-do 37859 (KR)
(74) Representative: Pfenning, Meinig & Partner mbB
(86) International application number: PCT/KR2024/097057
(87) International publication number: WO 2025/136022

(57) **Abstract**

A method for recovering lithium according to one embodiment of the present invention may include: preparing a solution containing lithium; adding a Ca-containing additive to the solution containing lithium to precipitate a magnesium-containing precipitate; and separating the precipitated precipitate to obtain a filtrate.

## Description

### [TECHNICAL FIELD]

The present invention relates to a method for recovering lithium.

### [BACKGROUND ART]

Lithium compounds are used for various purposes across various industries, such as secondary batteries, ceramics, glass, alloys, pharmaceuticals, and the like, and with the recent commercialization of electric vehicles and an increase in the need for electric power storage, demand for lithium materials is also expected to grow significantly in the future.

Raw materials for manufacturing lithium materials include mineral, brine, sea water, and the like. Among these, minerals include spodumene, petalite, lepidolite, and the like, and contain a relatively large amount of lithium of about 1% to 1.5%. However, in order to extract lithium from minerals, a very large number of processes, such as flotation, high-temperature calcination, pulverization, acid mixing, extraction, purification, concentration, precipitation, and the like, must be performed. Accordingly, a recovery procedure is complicated, costs are high due to high energy consumption, and there is a problem of severe environmental pollution due to use of acid in the process of extracting lithium.

In addition, it is known that a total of 2.5×10¹¹ tons of lithium is dissolved in seawater, and technologies mainly involve introducing a recovery apparatus including an adsorbent into seawater to selectively adsorb lithium and then extracting lithium by acid treatment. However, since the concentration of lithium contained in seawater is only 0.1 ppm to 0.2 ppm, extracting lithium from seawater is very inefficient and has a problem of poor economic feasibility.

Due to these problems, lithium is currently mainly extracted from brine. Brine is produced from natural salt lakes, and more than 70% of the world's reserves are distributed in South American regions such as Argentina, Chile, and Bolivia.

Lithium contained in brine is mainly extracted in the form of lithium carbonate. In a commercialized process, in order to extract lithium from lithium-containing brine in the form of lithium carbonate, a well is drilled in a natural salt lake located at an altitude of 3,000 m or higher, brine is pumped and confined in evaporation ponds, and then naturally evaporated over a long period of several months to about one year to concentrate lithium several to several tens of times. Thereafter, impurities such as Mg, Ca, and B are precipitated and removed, and lithium is recovered by causing an amount exceeding the solubility of lithium carbonate to precipitate.

In such brine, divalent cation impurities are present in an amount greater than lithium. When lithium is obtained as a solid, the impurities are precipitated together, and thus a purification process for removing the impurities is performed before lithium extraction. However, in such a purification process, lithium is precipitated in the form of a salt together with other impurities, thereby somewhat causing a problem of lithium loss.

In general, in a process of removing Mg among the impurities, a Ca-containing alkaline material is used as an inexpensive raw material, and Mg and SO₄ may both be removed in this process.

Mg²⁺ + SO₄²⁻ + Ca²⁺ + 2OH⁻ → Mg(OH)₂(↓) + CaSO₄(↓)

In order to recover Li from brine, Ca is also an impurity that must be removed. When the input amount of Ca is insufficient in the Mg removal process, Mg or SO₄ may not be effectively removed. When the input amount of Ca is too large, the residual amount of Ca in the brine increases, thereby causing problems in that a load of a downstream Ca removal process increases and a final Li yield decreases due to Li loss.

Accordingly, there is a need to develop a method for recovering lithium, which can improve Li purity and production efficiency by minimizing precipitation of lithium in a purification process in brine and effectively removing Mg.

### [DETAILED DESCRIPTION OF THE INVENTION]

### [Technical Problem]

One object of the present invention relates to a method for recovering lithium in brine, and more specifically, is to provide a method for recovering lithium in brine, which can reduce lithium loss in an impurity removal process by controlling a calcium concentration in concentrated brine into which a calcium-containing additive for removing magnesium has been introduced.

### [Technical Solution]

A method for recovering lithium in brine according to one embodiment of the present invention includes: preparing a solution containing lithium; adding a Ca-containing additive to the solution containing lithium to precipitate a magnesium-containing precipitate; and separating the precipitated precipitate to obtain a filtrate, wherein a Mg concentration in the filtrate is 0.1 g/L or less.

A Ca concentration of the filtrate may satisfy the following Relational Expression 1. [Relational Expression 1] $\left[Ca_f\right] = a \times \left[Ca_i\right] + b \times \left[B\right] + c \times \left[{SO}_{4}\right] + d 1 \times \left[Ca_ad\right] + d 2 \times {\left[Ca_ad\right]}^{2} + d 3 \times {\left[Ca_ad\right]}^{3}$

In Relational Expression 1,
[Ca_f] is a Ca concentration (mol/L) in the filtrate,
[Ca_i] is a Ca concentration (mol/L) in the solution containing lithium,
[B] is a B concentration (mol/L) in the solution containing lithium,
[SO₄] is an SO₄ concentration (mol/L) in the solution containing lithium,
[Ca_ad] is a value obtained by dividing an amount (mol) of the calcium-containing additive introduced into the solution containing lithium by a volume (L) of the solution,
a is a rational number from 120 to 140,
b is a rational number from 22 to 26,
c is a rational number from -90 to -75,
d1 is a rational number in a range of 155 to 175,
d2 is a rational number in a range of -1333 to -1200, and
d3 is a rational number in a range of 3450 to 3850.

The Ca-containing additive may be introduced in an amount of 1.1 to 1.5 equivalents (eq/mol) based on equivalents of magnesium ions.

The Ca-containing additive may include one or more selected from calcium hydroxide (Ca(OH)₂), calcium carbonate (CaCO₃), and calcium oxide (CaO), and specifically, the Ca-containing additive may be calcium hydroxide (Ca(OH)₂).

The solution containing lithium into which the Ca-containing additive has been introduced may have a pH of 10.5 to 12.0.

A concentration ratio of Ca to Li ([Ca]/[Li]) in the filtrate may be 1.05 or less, the Li concentration in the filtrate may be 1.5 to 8.0 g/L, and the Ca concentration may be 1.0 to 6.0 g/L.

In the step of preparing the solution containing lithium, a lithium concentration in the solution containing lithium may be 1.0 to 10.0 g/L.

When the lithium concentration in the solution containing lithium is 1.0 to 2.0 g/L, an alkali metal hydroxide may be further introduced in the step of adding the Ca-containing additive to the solution containing lithium to precipitate the magnesium-containing precipitate.

A molar ratio of the alkali metal hydroxide to Ca of the introduced Ca-containing additive may be 3:8.5 to 7:6.5.

In the step of preparing the solution containing lithium, a magnesium component concentration in the solution containing lithium may be 2.0 to 25.0 g/L.

In the step of preparing the solution containing lithium, a sulfate group (SO₄) concentration in the solution containing lithium may be 2.5 to 30.0 g/L.

The method may further include, after the step of separating the precipitated precipitate to obtain the filtrate, adding an impurity remover to the filtrate to remove impurities.

The step of adding the impurity remover to the filtrate to remove impurities may include adding a calcium remover to precipitate a calcium-containing precipitate.

In the step of adding the calcium remover to precipitate the calcium-containing precipitate, a lithium loss rate of the filtrate may be 5 wt% or less.

The calcium remover may include one or more selected from sodium hydroxide (NaOH), sodium carbonate (Na₂CO₃), calcium hydroxide (Ca(OH)₂), sodium sulfate (Na₂SO₄), and potassium hydroxide (KOH).

The calcium remover may be introduced in an amount of 0.2 to 1.2 equivalents (eq/mol) based on equivalents of calcium ions.

The pH of the solution containing lithium into which the Ca-containing additive has been introduced may satisfy the following Relational Expression 2. [Relational Expression 2] $pH_f = e \times \left[pH_i\right] + g \times \left[B\right] + h \times f \left(\left[Mg\right], Y\right) + i 1 \times \left[Ca_ad\right] + i 2 \times {\left[Ca_ad\right]}^{2} + i 3 \times {\left[Ca_ad\right]}^{3}$

In Relational Expression 2, f([Mg],Y) may be represented by a function expression of the pH of the filtrate and the Mg concentration (g/L) in the lithium-containing solution, 8.5+3*tanh[Mg/2]+exp(pH_f-10),
pH_f is the pH of the filtrate,
pH_i is the pH of the solution containing lithium,
[Mg] is a Mg concentration (mol/L) in the filtrate,
[MOH] is an OH concentration (mol/L) of an alkali metal hydroxide included in the filtrate,
[B] is a B concentration (mol/L) in the solution containing lithium,
[Ca_ad] is a Ca concentration (mol/L) of the calcium-containing additive introduced into the solution containing lithium,
e is a rational number from 3.2710 to 3.2730,
g is a rational number from 2.2980 to 2.3000,
h is a rational number from -0.8510 to -0.8520,
i1 is a rational number from 4.1030 to 4.1050,
i2 is a rational number from -0.7935 to -0.7920, and
i3 is a rational number from 0.0560 to 0.0580.

The input amount of the Ca-containing additive may be adjusted in consideration of measured values of [Ca_f], [Ca_i], [B], and [SO₄].

### [Advantageous Effects]

According to one embodiment of the present invention, a removal rate of magnesium impurities in brine can be improved.

According to one embodiment of the present invention, a recovery rate and purity of lithium recovered from brine can be improved.

### [BEST MODE FOR CARRYING OUT THE INVENTION]

In the present specification, terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In the present invention, when a part is described as "including" a certain component, this means that other components may be further included, rather than excluding other components, unless specifically stated to the contrary.

Hereinafter, embodiments of the present invention will be described in detail so that a person having ordinary skill in the art to which the present invention pertains can easily practice the present invention. However, the present invention may be embodied in various different forms and is not limited to the embodiments described herein.

One embodiment of the present invention relates to a method for recovering lithium.

The method for recovering lithium according to one embodiment of the present invention may include: preparing a solution containing lithium; adding a Ca-containing additive to the solution containing lithium to precipitate a magnesium-containing precipitate; and separating the precipitated precipitate to obtain a filtrate.

Meanwhile, the Ca concentration in the filtrate may satisfy the following Relational Expression 1. [Relational Expression 1] $\left[Ca_f\right] = a \times \left[Ca_i\right] + b \times \left[B\right] + c \times \left[{SO}_{4}\right] + d 1 \times \left[Ca_ad\right] + d 2 \times {\left[Ca_ad\right]}^{2} + d 3 \times {\left[Ca_ad\right]}^{3}$

In Relational Expression 1,
[Ca_f] is a Ca concentration (mol/L) in the filtrate,
[Ca_i] is a Ca concentration (mol/L) in the solution containing lithium,
[B] is a B concentration (mol/L) in the solution containing lithium,
[SO₄] is an SO₄ concentration (mol/L) in the solution containing lithium, and
[Ca_ad] is a value obtained by dividing an input amount (mol) of the calcium-containing additive introduced into the solution containing lithium by a volume (L) of the solution.
a is a factor obtained from a graph of calcium concentration in the lithium-containing solution after introduction of the calcium-containing additive according to the calcium concentration in the initial lithium-containing solution. The a is in a range of 120 to 140, more preferably in a range of 130 to 133, and still more preferably a rational number in a range of 131 to 131.5.
b is a factor obtained from a graph of calcium concentration in the lithium-containing solution after introduction of the calcium-containing additive according to the boron concentration in the initial lithium-containing solution. The b is in a range of 22 to 26, more preferably in a range of 23.5 to 24.5, and still more preferably a rational number in a range of 24.0 to 24.1.
c is a factor obtained from a graph of calcium concentration in the lithium-containing solution after introduction of the calcium-containing additive according to the sulfate group (SO₄) concentration in the initial lithium-containing solution. The c is in a range of -90 to -75, more preferably in a range of -83 to -80, and still more preferably a rational number of -82.0 to -81.5.
d1 to d3 are factors obtained from a graph of calcium concentration in the lithium-containing solution after introduction of the calcium-containing additive according to the Ca concentration of the calcium-containing additive introduced into the solution containing lithium. Since changes in each element in the solution according to the amount of the calcium-containing additive do not satisfy a simple linear proportional relationship, a second-order term (d2) capable of considering a change in slope in the graph and a third-order term (d3) capable of considering asymmetry were added to satisfy a nonlinear relationship. By using these terms, more multidimensional variables can be considered, but d1 to d3 were introduced with a minimum number of variables.

The d1 is a rational number in a range of 155 to 175.

The d2 is a rational number in a range of -1333 to -1200.

The d3 is a rational number in a range of 3450 to 3850.

In Relational Expression 1,
the concentration of sulfate groups (SO₄) in the solution containing lithium may be 0.025 to 0.3 mol/L, and specifically 0.15 to 0.25 mol/L.
[Ca_f] is a Ca concentration (mol/L) in the filtrate,
the Ca concentration [Ca_i] in the solution containing lithium may be 0.0025 to 0.025 mol/L, and specifically 0.0025 to 0.0125 mol/L.

The B concentration [B] in the solution containing lithium may be 0.05 to 0.4 mol/L, and specifically 0.1 to 0.3.0 mol/L.

The Ca concentration [Ca_ad] of the calcium-containing additive in the solution containing lithium into which the calcium-containing additive has been introduced may be 0.4 to 0.6 mol/L, and specifically 0.45 to 0.55 mol/L.

In one embodiment of the present invention, [Ca_f], [Ca_i], [B], and [SO₄] can be analyzed within a short time, and the input amount of the Ca-containing additive can be adjusted in consideration of the measured values. Specifically, a required input amount of the Ca-containing additive can be adjusted such that [Ca_f] of Relational Expression 1 is maintained at a level desired in the present invention.

In removing magnesium impurities from the solution containing lithium according to one embodiment of the present invention, by controlling concentrations of Ca, B, and SO₄ in the solution, an additional Ca concentration according to additive introduction, and an additive concentration, magnesium and other impurities can be effectively removed while lithium loss is minimized, thereby improving the recovery rate and purity of finally recovered lithium.

The method for recovering lithium according to the present invention includes preparing a solution containing lithium.

In the present invention, the solution containing lithium refers to an aqueous solution containing lithium, and is a lithium-containing liquid that is extracted from underground through a pump or introduced into a process in a self-eluting form. The lithium-containing solution is not limited to brine in salt lake regions, geothermal brine, oil field brine (oil well brine), and the like, as a lithium-containing aqueous solution that exists in the earth's crust in the form of groundwater or is introduced underground due to industrial needs (for example, introduced underground in a petroleum extraction process or introduced underground for geothermal power generation).

Specifically, the solution containing lithium may be brine. More specifically, the solution containing lithium may be concentrated brine.

The concentrated brine contains lithium and may have a pH in a range of 5.0 to 7.0, but is not limited thereto.

The method of obtaining the concentrated brine is not limited in the present invention.

The concentration of a lithium component in the solution containing lithium may be 0.5 to 20.0 g/L, specifically 1.0 to 10.0 g/L, and more specifically 1.5 to 4.0 g/L.

The concentration of a magnesium component in the solution containing lithium may be 2.0 to 25.0 g/L, and specifically 5.0 to 12 g/L.

The concentration of sulfate groups (SO₄) in the solution containing lithium may be 2.5 to 30.0 g/L, and specifically 15 to 25 g/L.

The concentration of a boron component in the solution containing lithium may be 0.5 to 10.0 g/L, and specifically 1.1 to 3.0 g/L.

In the step of adding the Ca-containing additive to the solution containing lithium to precipitate the magnesium-containing precipitate, one or more selected from calcium hydroxide (Ca(OH)₂), calcium carbonate (CaCO₃), and calcium oxide (CaO) may be included.

In one embodiment of the present invention, the Ca-containing additive may be calcium hydroxide (Ca(OH)₂). When calcium hydroxide is used as the additional additive, magnesium can be removed in the form of Mg(OH)₂ through introduction of hydroxide ions; pH conditions for removing metal impurities with carbonate can be prepared; even when calcium ions meet sulfate ions and precipitate and are additionally concentrated, generation of lithium sulfate precipitation can be suppressed; and the calcium ions meet borate ions and form a compound, thereby lowering a B concentration.

When the Ca-containing additive is introduced into the solution containing lithium, it is preferable because magnesium removal efficiency is excellent while precipitation of lithium can be suppressed.

The Ca-containing additive may be introduced in an amount of 1.0 to 1.6 equivalents (eq/mol) based on equivalents of magnesium ions, and specifically in an amount of 1.1 to 1.3 equivalents (eq/mol).

When the Ca-containing additive is less than the above equivalent range, the magnesium removal rate is low. When the Ca-containing additive exceeds the above equivalent range, Ca is introduced in an excessive amount, thereby increasing a calcium removal load in a downstream step of removing impurities such as calcium and also increasing a lithium precipitation amount, and thus there is a problem in that the lithium recovery rate in the overall process decreases.

Meanwhile, when the concentration of the lithium component in the solution containing lithium is 2.0 g/L or less, an alkali metal hydroxide may be further introduced in addition to the Ca-containing additive, and the alkali metal hydroxide may specifically be sodium hydroxide (NaOH).

A molar ratio of the sodium hydroxide to Ca of the Ca-containing additive (NaOH:Ca) may be 1:3 to 1:1, and specifically 1:2 to 1:1.2.

In the present invention, by additionally introducing sodium hydroxide at the above molar ratio, a concentration ratio of calcium to lithium ([Ca]/[Li]) in the filtrate after magnesium removal is controlled within a range desired in the present invention, so that calcium can be effectively removed in a downstream step of removing impurities such as calcium while lithium precipitation can be suppressed, which is preferable.

The concentration ratio of Ca to Li ([Ca]/[Li]) in the filtrate may be 1.05 or less, and specifically 1.0 or less.

The Li concentration in the filtrate may be 1.5 to 8.0 g/L, and the Ca concentration in the filtrate may be 1.0 to 6.0 g/L.

In the present invention, by controlling the Ca concentration, Li concentration, and concentration ratio thereof in the filtrate within the above ranges, calcium can be effectively removed in a downstream step of removing impurities such as calcium while lithium precipitation can be suppressed, which is preferable.

In one embodiment of the present invention, the step of adding the Ca-containing additive to the solution containing lithium to precipitate the magnesium-containing precipitate may include adjusting the temperature of the solution containing lithium to 50°C or higher, specifically 50 to 95°C.

When the temperature of the solution containing lithium is within the above range, impurities such as boron can also be effectively removed at the same time, and an expected lithium recovery rate can be increased without a change in lithium concentration. In addition, it is preferable because the solubility of a calcium precipitate, for example, calcium carbonate, is lowered within the solubility of a lithium compound in the solution containing lithium.

In one embodiment of the present invention, the step of adding the Ca-containing additive to the solution containing lithium to precipitate the magnesium-containing precipitate may include adding, to the solution containing lithium, a solution having a lower lithium concentration than the solution containing lithium.

When the solution having a lower lithium concentration than the solution containing lithium is added to the solution containing lithium, it is preferable because the lithium recovery rate can be increased by lowering the lithium concentration in the solution containing lithium.

The solution having a lower lithium concentration than the solution containing lithium may be, for example, a subsidiary raw material solution from which calcium has been removed, a liquid solution in a lithium-containing process having a low concentration, fresh water, or the like, but is not limited thereto.

In one embodiment of the present invention, in the step of adding the Ca-containing additive to the solution containing lithium to precipitate the magnesium-containing precipitate, the solution containing lithium into which the Ca-containing additive has been introduced may have a pH of 10.0 to 12.5, and specifically 10.5 to 12.0.

When the pH of the solution containing lithium into which the Ca-containing additive has been introduced satisfies the above range, not only is the magnesium removal rate excellent, but also the concentration ratio of calcium to lithium ([Ca]/[Li]) in the lithium-containing solution from which magnesium has been removed can be controlled within a range desired in the present invention, thereby improving the final lithium recovery rate. In addition, this is preferable because a filtration rate can be improved during solid-liquid separation in the step of separating the precipitated precipitate to obtain the filtrate, which will be described below. In addition, this is preferable because the generated precipitate has an appropriate particle diameter, and thus filtration is easy.

When the pH of the solution containing lithium into which the Ca-containing additive has been introduced is less than the above range, there is a problem in that magnesium removal efficiency is low, and thus purity of finally recovered lithium decreases. When the pH exceeds the above range, precipitate separation efficiency may decrease and costs may increase; a Ca content increases, thereby increasing a load in a downstream step of removing impurities such as calcium; and a lithium precipitation amount increases, thereby decreasing a lithium recovery rate.

In one embodiment of the present invention, the pH of the solution containing lithium into which the Ca-containing additive has been introduced may satisfy the following Relational Expression 2. [Relational Expression 2] $pH_f = e \times \left[pH_i\right] + g \times \left[B\right] + h \times f \left(\left[Mg\right], Y\right) + i 1 \times \left[Ca_ad\right] + i 2 \times {\left[Ca_ad\right]}^{2} + i 3 \times {\left[Ca_ad\right]}^{3}$

In Relational Expression 2,
f([Mg],Y) may be represented by a function expression of the pH of the filtrate and the Mg concentration (g/L) in the lithium-containing solution, 8.5+3*tanh[Mg/2]+exp(pH_f-10),
pH_f is the pH of the filtrate,
pH_i is the pH of the solution containing lithium,
[Mg] is a Mg concentration (mol/L) in the filtrate,
[MOH] is an OH concentration (mol/L) of an alkali metal hydroxide included in the filtrate,
[B] is a B concentration (mol/L) in the solution containing lithium, and
[Ca_ad] is a value obtained by dividing a Ca concentration (mol/L) of the calcium-containing additive introduced into the solution containing lithium by a volume (L) of the solution.
e is 3.2710 to 3.2730, and specifically a rational number of 3.2715 to 3.2725,
g is 2.2980 to 2.3000, and specifically a rational number of 2.2985 to 2.2995,
h is -0.8510 to -0.8520, and specifically a rational number of -0.8505 to -0.8515,
i1 is 4.1030 to 4.1050, and specifically a rational number of 4.1038 to 4.1044,
i2 is -0.7935 to -0.7920, and specifically a rational number of -0.7932 to -0.7926, and
i3 is 0.0560 to 0.0580, and specifically a rational number of 0.0566 to 0.0572.

The e, g, h, and i1 to i3 are factors obtained from a graph of calcium concentration in the lithium-containing solution after introduction of the calcium-containing additive according to the calcium concentration in the initial lithium-containing solution.

In one embodiment of the present invention, the method may further include, after the step of separating the precipitated precipitate to obtain the filtrate, adding an impurity remover to the filtrate to remove impurities.

The step of adding the impurity remover to the filtrate to remove impurities may be a step of adding a calcium remover to precipitate a calcium-containing precipitate.

Specifically, when compared with the filtrate before adding the calcium remover, a lithium loss rate of the filtrate may be 5% or less, and specifically 3% or less.

The calcium remover may include one or more selected from sodium hydroxide (NaOH), sodium carbonate (Na₂CO₃), calcium hydroxide (Ca(OH)₂), sodium sulfate (Na₂SO₄), and potassium hydroxide (KOH).

Lithium may be recovered by separating, after completion of the reaction in which the precipitate is precipitated, a solid phase and a liquid-phase filtrate through a reduced-pressure filtration method, and may be recovered from the filtrate.

For example, the filtrate may be carbonated or phosphated to recover lithium in the form of lithium carbonate or lithium phosphate, but is not limited thereto.

The method for recovering lithium according to the present invention quantifies, as Relational Expression 1, a lithium recovery process technology according to a residual calcium concentration in the solution after magnesium removal, and thus has an advantage in that magnesium impurities in the lithium-containing solution can be effectively removed while lithium loss is minimized, thereby improving a lithium recovery rate and purity.

### [MODE FOR CARRYING OUT THE INVENTION]

Hereinafter, embodiments of the present invention will be described in more detail through Examples. However, the following Examples are only preferred embodiments of the present invention, and the present invention is not limited to the following Examples.

### (Preparation Examples Using Ca(OH)₂)

Table 1 shows the composition of the solution containing lithium before Ca(OH)₂ was introduced as a magnesium remover, and the composition of the filtrate after magnesium was precipitated using Ca(OH)₂. At this time, the filtrate was obtained by the following method.

As the solution containing lithium, Ca(OH)₂ powder was introduced into 200 ml of concentrated brine in the equivalent amount shown in Table 1 relative to the magnesium content, and the mixture was stirred at 200 RPM for 2 hours to precipitate a precipitate.

After the precipitate was precipitated, calcium was removed by separating the solid phase and the liquid phase using a pressure-type solid-liquid separation apparatus, and components of the filtrate from which magnesium had been removed were analyzed, and the results are shown in Table 1 below.

Component analysis was performed using an ICP analyzer.

**[Table 1]**

| | | Before Reaction | | | | | | Equivalent | Filtrate After Magnesium Removal | | | | Relation | Relation |
|---|---|---|---|---|---|---|---|---|---|---|---|---|---|---|
| | | pH | Composition (g/L) | | | | | Ratio (Ca(OH)₂/ Mg Before Reaction) | Residual Mg (g/L) | Residual Ca (g/L) | pH | Ca/Li | al Expressi on 1 | al Expressi on 2 |
| | | | Li | S | Ca | B | Mg | | | | | | | |
| Preparation Example 1 | Comp ositio n 1 | 6.65 | 3.900 | 11.21 | 0.237 | 2.661 | 9.093 | 1.00 | 1.491 | 2.401 | 9.27 | 0.608 | 2.452 | 9.73 |
| Preparation Example 2 | | | | | | | | 1.15 | 0.379 | 3.122 | 9.55 | 0.788 | 3.018 | 9.50 |
| Preparation Example 3 | | | | | | | | 1.30 | 0.000 | 3.894 | 10.94 | 0.983 | 3.871 | 10.78 |
| Preparation Example 4 | | | | | | | | 1.45 | 0.000 | 3.951 | 11.78 | 1.020 | 3.927 | 11.53 |
| Preparation Example 5 | Comp ositio n 2 | 6.68 | 4.270 | 11.81 | 0.261 | 2.835 | 9.602 | 1.00 | 1.245 | 2.612 | 9.79 | 0.609 | 2.578 | 10.26 |
| Preparation Example 6 | | | | | | | | 1.15 | 0.156 | 3.348 | 10.27 | 0.776 | 3.503 | 10.38 |
| Preparation Example 7 | | | | | | | | 1.30 | 0.000 | 3.782 | 11.19 | 0.897 | 3.912 | 11.74 |
| Preparation Example 8 | | | | | | | | 1.45 | 0.000 | 4.044 | 11.87 | 0.969 | 4.095 | 11.86 |
| Preparation Example 9 | Comp ositio n 3 | 6.70 | 3.868 | 11.38 | 0.239 | 2.725 | 9.202 | 1.00 | 2.022 | 1.698 | 9.58 | 0.429 | 1.713 | 9.95 |
| Preparation Example 10 | | | | | | | | 1.15 | 0.924 | 2.183 | 9.80 | 0.534 | 2.120 | 9.42 |
| Preparation Example 11 | | | | | | | | 1.30 | 0.009 | 3.208 | 10.72 | 0.805 | 3.081 | 10.20 |
| Preparation Example 12 | | | | | | | | 1.45 | 0.000 | 3.807 | 11.80 | 0.949 | 3.849 | 12.32 |
| Preparation Example 13 | Comp ositio n 4 | 6.60 | 4.068 | 11.66 | 0.248 | 2.775 | 9.348 | 1.00 | 1.305 | 1.939 | 9.35 | 0.476 | 1.979 | 9.41 |
| Preparation Example 14 | | | | | | | | 1.15 | 0.364 | 2.757 | 9.68 | 0.662 | 2.623 | 10.15 |
| Preparation Example 15 | | | | | | | | 1.30 | 0.000 | 3.845 | 10.85 | 0.916 | 3.701 | 10.54 |
| Preparation Example 16 | | | | | | | | 1.45 | 0.000 | 3.825 | 11.49 | 0.928 | 3.644 | 11.86 |
| Preparation Example 17 | Comp ositio n 5 | 6.23 | 1.576 | 5.749 | 0.452 | 1.039 | 3.384 | 1.00 | 0.978 | 1.188 | 9.51 | 0.751 | 1.165 | 9.17 |
| Preparation Example 18 | | | | | | | | 1.15 | 0.476 | 1.485 | 9.67 | 0.938 | 1.495 | 9.63 |
| Preparation Example 19 | | | | | | | | 1.30 | 0.053 | 2.064 | 10.17 | 1.302 | 2.093 | 10.28 |
| Preparation Example 20 | | | | | | | | 1.45 | 0.000 | 2.230 | 11.30 | 1.407 | 2.335 | 10.95 |
| Preparation Example 21 | Comp ositio n 6 | 6.92 | 1.742 | 5.972 | 0.402 | 1.165 | 3.632 | 1.00 | 0.949 | 1.185 | 9.53 | 0.677 | 1.234 | 9.12 |
| Preparation Example 22 | | | | | | | | 1.15 | 0.413 | 1.506 | 9.72 | 0.859 | 1.442 | 9.26 |
| Preparation Example 23 | | | | | | | | 1.30 | 0.028 | 1.687 | 10.32 | 0.968 | 1.733 | 10.64 |
| Preparation Example 24 | | | | | | | | 1.45 | 0.000 | 1.914 | 11.32 | 1.099 | 1.863 | 11.86 |
| Preparation Example 25 | Comp ositio n 7 | 4.85 | 5.427 | 18.015 | 0.204 | 3.521 | 11.83 | 1.00 | 1.778 | 2.467 | 9.36 | 0.455 | 2.457 | 9.50 |
| Preparation Example 26 | | | | | | | | 1.15 | 0.457 | 3.187 | 9.38 | 0.587 | 3.176 | 9.27 |
| Preparation Example 27 | | | | | | | | 1.30 | 0.000 | 4.080 | 10.41 | 0.752 | 3.831 | 10.14 |
| Preparation Example 28 | | | | | | | | 1.45 | 0.000 | 4.458 | 11.07 | 0.821 | 4.420 | 10.73 |
| Preparation Example 29 | Comp ositio n8 | 4.63 | 6.803 | 22.898 | 0.173 | 4.44 | 14.83 | 1.00 | 2.088 | 2.659 | 9.17 | 0.391 | 2.559 | 8.83 |
| Preparation Example 30 | | | | | | | | 1.15 | 0.424 | 3.324 | 9.94 | 0.489 | 3.313 | 9.54 |
| Preparation Example 31 | | | | | | | | 1.30 | 0.000 | 4.292 | 10.59 | 0.631 | 3.963 | 10.49 |
| Preparation Example 32 | | | | | | | | 1.45 | 0.000 | 4.593 | 11.90 | 0.675 | 4.511 | 11.68 |

Referring to Table 1, it can be confirmed that, as the equivalent ratio of Ca(OH)₂ to magnesium in the solution before reaction (Ca(OH)₂/Mg before reaction) increases, the magnesium removal rate tends to increase.

In the case of Preparation Examples 1 to 16, in which the lithium concentration in the solution before reaction was about 4.0 /L, it can be confirmed that the concentration ratio of Ca to Li in the filtrate was 1.05 or less in all cases in which the equivalent ratio (Ca(OH)₂/Mg before reaction) was 1.00, 1.15, 1.30, or 1.45.

In addition, in the case of Preparation Examples 1 to 16, when the equivalent ratio (Ca(OH)₂/Mg before reaction) was 1.30 or 1.45, the residual Mg concentration in the filtrate was shown to be less than 0.1 g/L, but when the equivalent ratio (Ca(OH)₂/Mg before reaction) was 1.00 and 1.15, the residual Mg concentration in the filtrate was confirmed to be less than 0.1 g/L.

Meanwhile, in the case of Preparation Examples 17 to 24, in which the lithium concentration in the solution before reaction was less than 2.0 g/L, when the equivalent ratio (Ca(OH)₂/Mg before reaction) was 1.45, the residual Mg concentration in the filtrate was shown to be less than 0.1 g/L, but when the equivalent ratio (Ca(OH)₂/Mg before reaction) was 1.00, 1.15, and 1.30, the residual Mg concentration in the filtrate was shown to be greater than 0.1 g/L.

In addition, in the case of Preparation Examples 17 to 24, it was shown that as the equivalent ratio (Ca(OH)₂/Mg before reaction) increased, the concentration ratio of Ca to Li (Ca/Li) in the filtrate increased.

As a result, in the case of a lithium-containing solution having a low degree of concentration, the amount of equivalents of Ca(OH)₂ required for Mg removal is relatively large, resulting in a relatively increased concentration ratio of Ca to Li (Ca/Li) in the filtrate from which Mg has been removed.

### (Preparation Examples Using Ca(OH)₂ and NaOH)

In the same manner as in the Preparation Examples using Ca(OH)₂, a magnesium removal experiment was performed using Composition 5 of Table 1 by further introducing NaOH in addition to Ca(OH)₂ as a magnesium remover. At this time, the equivalent ratio ((Ca(OH)₂+NaOH)/Mg before reaction) was set to 1.35.

Analysis results are shown in Table 2 below.

**[Table 2]**

| | | Before Reaction | | | | | Molar Ratio NaOH/Ca(OH )₂ | Filtrate After Magnesium Removal | | | | Relational Expressio n 1 | Relational Expressio n 2 |
|---|---|---|---|---|---|---|---|---|---|---|---|---|---|
| | | Composition (g/L) | | | | | | Mg (g/L) | Ca (g/L) | pH | Ca/Li | | |
| | | Li | S | Ca | B | Mg | | | | | | | |
| Preparation Example 33 | | | | | | | 0:10 | 0.000 | 2.442 | 11.33 | 1.394 | 2.504 | 10.86 |
| Preparation Example 34 | 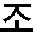 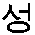 | 1.576 | 5.749 | 0.452 | 1.039 | 3.384 | 2:9 | 0.000 | 2.033 | 11.44 | 1.161 | 1.941 | 10.73 |
| Preparation Example 35 | 5 | | | | | | 4:8 | 0.000 | 1.706 | 11.57 | 0.975 | 1.662 | 11.12 |
| Preparation Example 36 | | | | | | | 6:7 | 0.000 | 1.451 | 11.68 | 0.830 | 1.536 | 11.29 |

Referring to Table 2, it was confirmed that, when the molar ratio of NaOH to Ca(OH)₂ was 1:2 and 6:7, the concentration ratio of Ca to Li (Ca/Li) in the filtrate from which Mg had been removed was less than 1.0, and it was confirmed that Relational Expression 1 also reproduced a numerical value at a Li concentration level of 1.75 g/L in the filtrate.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A method for recovering lithium, comprising:
preparing a solution containing lithium;
adding a Ca-containing additive to the solution containing lithium to precipitate a magnesium-containing precipitate; and
separating the precipitated precipitate to obtain a filtrate,
wherein a Mg concentration in the filtrate is 0.1 g/L or less, and
wherein a Ca concentration of the filtrate satisfies the following Relational Expression 1: [Relational Expression 1] $\left[Ca_f\right] = a \times \left[Ca_i\right] + b \times \left[B\right] + c \times \left[{SO}_{4}\right] + d 1 \times \left[Ca_ad\right] + d 2 \times {\left[Ca_ad\right]}^{2} + d 3 \times {\left[Ca_ad\right]}^{3}$
wherein, in Relational Expression 1,
[Ca_f] is a Ca concentration (mol/L) in the filtrate,
[Ca_i] is a Ca concentration (mol/L) in the solution containing lithium,
[B] is a B concentration (mol/L) in the solution containing lithium,
[SO₄] is an SO₄ concentration (mol/L) in the solution containing lithium,
[Ca_ad] is a value obtained by dividing an amount (mol) of the calcium-containing additive introduced into the solution containing lithium by a volume (L) of the solution,
a is a rational number from 120 to 140,
b is a rational number from 22 to 26,
c is a rational number from -90 to -75,
d1 is a rational number in a range of 155 to 175,
d2 is a rational number in a range of -1333 to -1200, and
d3 is a rational number in a range of 3450 to 3850.

2. The method for recovering lithium of claim 1,
wherein the Ca-containing additive is introduced in an amount of 1.1 to 1.50 equivalents (eq/mol) based on equivalents of magnesium ions.

3. The method for recovering lithium of claim 1,
wherein the Ca-containing additive comprises one or more selected from calcium hydroxide (Ca(OH)₂), calcium carbonate (CaCO₃), and calcium oxide (CaO).

4. The method for recovering lithium of claim 3,
wherein the Ca-containing additive is calcium hydroxide (Ca(OH)₂).

5. The method for recovering lithium of claim 1,
wherein the solution containing lithium into which the Ca-containing additive has been introduced has a pH of 10.5 to 12.0.

6. The method for recovering lithium of claim 1,
wherein a concentration ratio of Ca to Li ([Ca]/[Li]) in the filtrate is 1.05 or less.

7. The method for recovering lithium of claim 1,
wherein a Li concentration in the filtrate is 1.5 to 8.0 g/L.

8. The method for recovering lithium of claim 1,
wherein a Ca concentration in the filtrate is 1.0 to 6.0 g/L.

9. The method for recovering lithium of claim 1,
wherein, in preparing the solution containing lithium,
a lithium concentration in the solution containing lithium is 1.0 to 10.0 g/L.

10. The method for recovering lithium of claim 9,
wherein, in preparing the solution containing lithium,
the lithium concentration in the solution containing lithium is 1.0 to 2.0 g/L, and
wherein, in adding the Ca-containing additive to the solution containing lithium to precipitate the magnesium-containing precipitate,
an alkali metal hydroxide is further introduced.

11. The method for recovering lithium of claim 10,
wherein a molar ratio of the alkali metal hydroxide to Ca of the introduced Ca-containing additive is 3:8.5 to 7:6.5.

12. The method for recovering lithium of claim 1,
wherein, in preparing the solution containing lithium,
a magnesium component concentration in the solution containing lithium is 2.0 to 25.0 g/L.

13. The method for recovering lithium of claim 1,
wherein, in preparing the solution containing lithium,
a sulfate group (SO₄) concentration in the solution containing lithium is 2.5 to 30.0 g/L.

14. The method for recovering lithium of claim 1, further comprising,
after separating the precipitated precipitate to obtain the filtrate,
adding an impurity remover to the filtrate to remove impurities.

15. The method for recovering lithium of claim 14,
wherein adding the impurity remover to the filtrate to remove impurities comprises adding a calcium remover to precipitate a calcium-containing precipitate.

16. The method for recovering lithium of claim 15,
wherein, in adding the calcium remover to precipitate the calcium-containing precipitate,
a lithium loss rate of the filtrate is 5 wt% or less.

17. The method for recovering lithium of claim 15,
wherein the calcium remover comprises one or more selected from sodium hydroxide (NaOH), sodium carbonate (Na₂CO₃), calcium hydroxide (Ca(OH)₂), sodium sulfate (Na₂SO₄), and potassium hydroxide (KOH).

18. The method for recovering lithium of claim 15,
wherein the calcium remover is introduced in an amount of 0.2 to 1.2 equivalents (eq/mol) based on equivalents of calcium ions.

19. The method for recovering lithium of claim 1,
wherein the pH of the solution containing lithium into which the Ca-containing additive has been introduced satisfies the following Relational Expression 2: [Relational Expression 2] $pH_f = e \times \left[pH_i\right] + g \times \left[B\right] + h \times f \left(\left[Mg\right], Y\right) + i 1 \times \left[Ca_ad\right] + i 2 \times {\left[Ca_ad\right]}^{2} + i 3 \times {\left[Ca_ad\right]}^{3}$
wherein, in Relational Expression 2,
f([Mg],Y) may be represented by a function expression of the pH of the filtrate and the Mg concentration (g/L) in the lithium-containing solution, 8.5+3*tanh[Mg/2]+exp(pH_f-10),
pH_f is the pH of the filtrate,
pH_i is the pH of the solution containing lithium,
[Mg] is a Mg concentration (mol/L) in the filtrate,
[MOH] is an OH concentration (mol/L) of an alkali metal hydroxide included in the filtrate,
[B] is a B concentration (mol/L) in the solution containing lithium,
[Ca_ad] is a Ca concentration (mol/L) of the calcium-containing additive introduced into the solution containing lithium,
e is a rational number from 3.2710 to 3.2730,
g is a rational number from 2.2980 to 2.3000,
h is a rational number from -0.8510 to -0.8520,
i1 is a rational number from 4.1030 to 4.1050,
i2 is a rational number from -0.7935 to -0.7920, and
i3 is a rational number from 0.0560 to 0.0580.

20. The method for recovering lithium of claim 1,
wherein an input amount of the Ca-containing additive is adjusted in consideration of measured values of [Ca_f], [Ca_i], [B], and [SO₄].
